# EUROPÄISCHE PATENTSCHRIFT

(11) **EP 1 498 446 B1**
(45) Veröffentlichungstag und Bekanntmachung des Hinweises auf die Patenterteilung: **04.10.2006**
(21) Anmeldenummer: 04016077.2
(22) Anmeldetag: 08.07.2004
(51) Int. Cl.: C08K 3/34

(54) **Redispersionspulver mit puzzolanischen Komponenten**
Redispersion powders containing pozzolanic components
Poudres de redispersion contenant des componants pozzolaniques

(30) Priorität: 17.07.2003 DE 10332526
(43) Veröffentlichungstag der Anmeldung: 19.01.2005
(73) Patentinhaber: Wacker Polymer Systems GmbH & Co. KG, 84489 Burghausen (DE)
(72) Erfinder: Weitzel, Hans-Peter, Dr., 84571 Reischach (DE); Lutz, Hermann, Dr., 84547 Emmerting (DE); Fritze, Peter, Dr., 84533 Haiming (DE); Killat, Stefan, Dr., 84489 Burghausen (DE)
(74) Vertreter: Schuderer, Michael

(56) Entgegenhaltungen:
- US-A1- 2002 035 174
- DATABASE WPI Section Ch, Week 197522 Derwent Publications Ltd., London, GB; Class A93, AN 1975-37058W XP002299672 & SU 430 111 A (CEMENT IND RES INST) 7. Januar 1975 (1975-01-07)

## Beschreibung

Die Erfindung betrifft in Wasser redispergierbare Polymerpulver-Zusammensetzungen mit einer oder mehreren Komponenten mit puzzolanischen Eigenschaften, Verfahren zu deren Herstellung und deren Verwendung.

Polymerisate auf Basis von Vinylester, Vinylchlorid, (Meth)-acrylatmonomeren, Styrol, Butadien und Ethylen werden vor allem in Form deren in Wasser redispergierbarer Polymerpulver in vielerlei Anwendungen, beispielsweise als Beschichtungsmittel oder Klebemittel für die unterschiedlichsten Substrate eingesetzt. Diese Produkte finden insbesondere Verwendung als Bindemittel in hydraulisch abbindenden Klebstoffen wie in WDVS-Mörteln (WDVS = Wärmedämmverbundsystem), und in Fliesenklebern auf Basis von Zementen oder Gips. Wichtige Eigenschaften von hydraulisch abbindenden Mörtelmassen sind unter anderem die Verarbeitbarkeit über die Zeit und deren mechanische Festigkeit nach Aushärtung. Der Zusatz von Redispersionspulver wirkt in dreifacher Hinsicht: Es erhöht das Wasserrückhaltevermögen des Mörtels, es reduziert durch Filmbildung die Verdunstung und verstärkt als zusätzliches Bindemittel die mechanische Festigkeit des ausgehärteten Mörtels.

In US 2002/0035174 A1 werden zementäre Zusammensetzungen, welche neben Zement noch Puzzolane enthalten beschrieben. Es bestand die Aufgabe, die Resistenz von zementären Materialien gegenüber aggresiven Flüssigkeiten zu verbessern. Dies wurde mittels Zugabe der Puzzolane erreicht. Daneben enthält die zementäre Zusammensetzung noch ein Acrylatpolymerisat. Die zementären Zusammensetzungen werden dadurch erhalten, dass in einem ersten Schritt das Puzzolan und im zweiten Schritt das Acrylatpolymerisat, welches noch Entschäumer enthält, zum Zement zugegeben werden.

In der SU 430111 A werden zementäre Zusammensetzungen, deren Schrumpfverhalten während der Trocknung verbessert ist, beschrieben. Dies wird mittels einer Zusammensetzung erreicht, welche neben Portland-Zement und Füllstoff noch Aluminatzement, eine wässrige Polymerdispersion sowie Puzzolane enthält.

Aufgabe der Erfindung war es, in Wasser redispergierbare Polymerpulver-Zusammensetzungen zu entwickeln, deren Zusatz die mechanische Festigkeit des ausgehärteten Mörtels weiter steigern kann.

Überraschenderweise konnte diese Aufgabe durch Zugabe von Additiven mit puzzolanischen Eigenschaften, das heißt durch Zugabe von sogenannten Puzzolanen gelöst werden.

Gegenstand der Erfindung sind in Wasser redispergierbare Polymerpulver-Zusammensetzungen auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, einem oder mehreren Schutzkolloiden, gegebenenfalls Antiblockmittel, dadurch gekennzeichnet, dass ein oder mehrere Verbindungen aus der Gruppe der Puzzolane enthalten sind.

Additive mit puzzolanischen Eigenschaften (Puzzolane) sind kieselsäurehaltige oder kieselsäure- und tonerdehaltige natürliche oder künstliche Stoffe, ohne selbstständiges Bindevermögen, die aber zusammen mit Wasser und Kalk wasserunlösliche Verbindungen mit zementartigen Eigenschaften bilden (BIM-Lexikon in www.b-i-m.de). Man unterscheidet zwischen natürlichen und künstlichen Puzzolanen. Zu den natürlichen Puzzolanen zählen glasreiche Aschen und Gesteine vulkanischen Ursprungs, beispielsweise Bims (Bimsstein), Trass (feingemahlener Tuffstein), Santorinerde, Kieselgur, Hornsteine (Kieselgesteine), Kieselschiefer und Molererde. Künstliche Puzzolane sind gebrannter, gemahlener Ton (Ziegelmehl), Flugaschen wie Steinkohle-Kraftwerksasche, Silicastaub, Ölschieferasche (Ölschiefer = bituminöser, kalkhaltiger Schiefer), sowie calziniertes Kaolin (Metakaolin).

Bevorzugt werden die künstlichen Puzzolane aus der Gruppe umfassend Ziegelmehl, Flugasche, Silicastaub, Ölschieferasche, sowie Metakaolin. Am meisten bevorzugt wird Metakaolin. Die Einsatzmenge beträgt 5 bis 50 Gew.-%, vorzugsweise 10 bis 30 Gew.-%, jeweils bezogen auf das Gesamtgewicht der in Wasser redispergierbare Polymerpulver-Zusammensetzung.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri (alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9^{R}, VeoVa10^{R}, VeoVa11^{R};
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert: Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylper-oxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder eines Rotationszerstäubers erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe (Schutzkolloid) in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-%, bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt, wobei die als Schutzkolloide bevorzugten Polyvinylalkohole auch bevorzugt als Verdüsungshilfe eingesetzt werden.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver zusätzlich mit einem herkömmlichen Antiblockmittel (Antibackmittel), vorzugsweise 5 bis 20 Gew.-%, bezogen auf das Gesamtgewicht polymerer Bestandteile, ausgerüstet werden. Beispiele für herkömmliche Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu zerstäubenden Speise wird über den Feststoffgehalt so eingestellt, dass ein Wert von < 1000 mPas (Brookfield-Viskosität bei 20 Umdrehungen und 23°C), bevorzugt < 250 mPas, erhalten wird. Der Feststoffgehalt der zu zerstäubenden Dispersion beträgt > 35 %, bevorzugt > 40 %.

Zur Verbesserung der anwendungstechnischen Eigenschaften können während der Zerstäubung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Zur Herstellung der Polymerpulver-Zusammensetzung wird das Puzzolan vor, während oder nach der Trocknung zugegeben. Wird es vor der Trocknung zugegeben, kann man so vorgehen, dass man das Puzzolan der entsprechenden Polymerdispersion zumischt und diese anschließend trocknet. Vorzugsweise wird das Puzzolan dem Polymerpulver während und nach der Trocknung zugegeben. Die bevorzugte Zugabe während der Trocknung kann durch Verteilen des Puzzolans in die Trocknungsluft bzw. in der Trockenkammer zeitgleich mit der Zerstäubung der Speise (Polymerdispersion) erfolgen. In einer besonders bevorzugten Ausführungsform werden zusätzlich zum Puzzolan keine Antiblockmittel mehr eingesetzt.

Die in Wasser redispergierbaren Polymerpulver-Zusammensetzungen können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Fliesenkleber und Vollwärmeschutzkleber (WDVS-Kleber).

### Beispiele:

### Dispersion D1:

Als Dispersion wurde eine polyvinylalkoholstabilisierte Dispersion eines Copolymeren aus Vinylacetat und Ethylen verwendet. Die Herstellung erfolgte nach dem Fachmann bekannten Methoden der Emulsionspolymerisation. Zur Stabilisierung wurden 10 Gew.-% eines Polyvinylalkoholes mit einem Verseifungsgrad von 88 Mol-% und einer Viskosität nach Höppler von 4 mPas verwendet. Die Copolymerzusammensetzung betrug 92 Gew.-% Vinylacetat und 8 Gew.-% Ethylen.

### Dispersion D2:

Als Dispersion wurde eine polyvinylalkoholstabilisierte Dispersion eines Copolymeren aus Vinylacetat und Ethylen verwendet. Die Herstellung erfolgte nach dem Fachmann bekannten Methoden der Emulsionspolymerisation. Zur Stabilisierung wurden 10 Gew.-% eines Polyvinylalkoholes mit einem Verseifungsgrad von 88 Mol-% und einer Viskosität nach Höppler von 4 mPas verwendet. Die Copolymerzusammensetzung betrug 88 Gew.-% Vinylacetat und 12 Gew.-% Ethylen.

### Pulver:

Die Pulver wurden durch Sprühtrocknung der genannten Dispersionen unter Zusatz von 5 Gew.-% eines Polyvinylalkoholes mit einem Verseifungsgrad von 88 Mol-% und einer Viskosität nach Höppler von 4 mPas und 2 Gew.-% eines Polyvinylalkoholes mit einem Verseifungsgrad von 88 Mol-% und einer Viskosität nach Höppler von 13 mPas hergestellt.
Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% bzw. 20 Gew.-% Metakaolin versetzt. Zum Vergleich wurden Pulver hergestellt, denen anstelle des Metakaolins die gleichen Mengen eines handelsüblichen Antiblockmittels (Calcium-Magnesium-Carbonat) zugegeben wurden.

### Ausprüfung:

Die erhaltenen Pulver wurden auf ihre Pulvereigenschaften und auf die Wirksamkeit in mineralischen Fliesenklebern überprüft.

### Rieselfähigkeit RF:

Die Rieselfähigkeit wurde nur optisch über die Ausbildung des Schüttkegels beurteilt.

### Bestimmung der Blockfestigkeit BF:

Zur Bestimmung der Blockfestigkeit wurde das Dispersionspulver in ein Eisenrohr mit Verschraubung gefüllt und danach mit einem Metallstempel belastet. Unter Belastung wurde 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1-3 = sehr gute Blockstabilität
4-6 = gute Blockstabilität
7-8 = befriedigende Blockstabilität
9-10 = nicht blockstabil, Pulver lässt sich nicht Zerdrücken oder ist nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 %-ig in Wasser durch Einwirkung von starken Scherkräften erzeugt.
Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

Die Ergebnisse der Prüfung der Rieselfähigkeit RF, der Blockfestigkeit BF und des Absitzverhaltens RA der Redispersionspulver sind in Tabelle 1 zusammengefasst.

Sie zeigen, dass man mit dem Zusatz der Puzzolane Redispersionspulver erhält, welche bezüglich ihrer Pulvereigenschaften, denen mit Antiblockmitteln modifizierten überlegen sind. Damit erhält man mit den Puzzolanen rieselfähige, nichtbackende Pulver, ohne den Nachteil, von mit Antiblockmitteln modifizierten Pulver, das heißt deren inerten Charakter.

**Tabelle 1:**

| Beispiel | Dispersion | Additiv | Menge Gew.% | RF | BF | RA |
|---|---|---|---|---|---|---|
| V1 | D1 | Ca-Mg-CO₃ | 20 | gut | 3.5 | 2.6 |
| 2 | D1 | Metakaolin | 10 | gut | 3.0 | 2.4 |
| 3 | D1 | Metakaolin | 20 | gut | 1.5 | 3.0 |
| V4 | D2 | Ca-Mg-CO₃ | 20 | gut | 3.5 | 2.3 |
| 5 | D2 | Metakaolin | 10 | gut | 3.0 | 2.6 |
| 6 | D2 | Metakaolin | 20 | gut | 2.5 | 2.1 |

Bestimmung der Haftzugfestigkeiten eines mit den Redispersionspulvern modifizierten, zementären Fliesenklebers:

Die Haftzugfestigkeiten im Fliesenkleber wurden in folgender Rezeptur überprüft (3 % Kunststoffanteil):

| | |
|---|---|
| Quarzsand | 565 Teile |
| Portlandzement | 400 Teile |
| Cellulose | 5 Teile |
| Redispersionspulver | 30 Teile |

Es wurden die Haftzugfestigkeiten nach 3 Lagerbedingungen bestimmt:

| | |
|---|---|
| 28T: | 28 Tage Trockenlagerung |
| 7T/21N: | 7 Tage trocken/21 Tage nass (Nasslagerung) |
| 14T/14TS+70°C/1T: | Wärmelagerung |
| F/T: | Frost-Tau-Zyklus |

Die Ergebnisse dieser Prüfung sind in Tabelle 2 zusammengefasst.

Sie zeigen den positiven Effekt der Puzzolane, insbesondere auf die Haftzugsfestigkeit nach Wasserlagerung.

**Tabelle 2:**

| Beispiel | 28T N/mm² | 7T/21N N/mm² | 14T/14TS+70/1T N/mm² | F/T N/mm² |
|---|---|---|---|---|
| V1 | 1.90 | 0.96 | 1.36 | 1.15 |
| 2 | 1.85 | 1.11 | 1.41 | 1.19 |
| 3 | 1.91 | 1.17 | 1.61 | 1.28 |
| V4 | 1.80 | 0.99 | 1.33 | 1.14 |
| 5 | 1.84 | 1.14 | 1.37 | 1.18 |
| 6 | 2.09 | 1.27 | 1.32 | 1.25 |

## Patentansprüche

1. In Wasser redispergierbare Polymerpulver-Zusammensetzungen auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, einem oder mehreren Schutzkolloiden, gegebenenfalls Antiblockmittel, **dadurch gekennzeichnet, dass** ein oder mehrere Verbindungen aus der Gruppe der Puzzolane enthalten sind.

2. In Wasser redispergierbare Polymerpulver-Zusammensetzungen nach Anspruch 1, **dadurch gekennzeichnet, dass** ein oder mehrere Puzzolane enthalten sind aus der Gruppe umfassend Bims, Trass, Santorinerde, Kieselgur, Hornsteine, Kieselschiefer, Molererde, Ziegelmehl, Flugasche, Silicastaub, Ölschieferasche, calziniertes Kaolin.

3. In Wasser redispergierbare Polymerpulver-Zusammensetzungen nach Anspruch 1, **dadurch gekennzeichnet, dass** als Puzzolan Metakaolin enthalten ist.

4. In Wasser redispergierbare Polymerpulver-Zusammensetzungen nach Anspruch 1 bis 3, **dadurch gekennzeichnet, dass** als Homo- oder Mischpolymerisate Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, eingesetzt werden.

5. In Wasser redispergierbare Polymerpulver-Zusammensetzungen nach Anspruch 1 bis 4, **dadurch gekennzeichnet, dass** als Schutzkolloid teilverseifte oder vollverseifte, gegebenenfalls hydrophob modifizierte, Polyvinylalkohole mit einem Hydrolysegrad von 80 bis 100 Mol% und einer Höpplerviskosität, in 4 %-iger wässriger Lösung von 1 bis 30 mPas (Methode nach Höppler bei 20°C, DIN 53015), eingesetzt werden.

6. In Wasser redispergierbare Polymerpulver-Zusammensetzungen nach Anspruch 1 bis 5, **dadurch gekennzeichnet, dass** die Puzzolan-Komponente in einer Menge von 5 bis 50 Gew.-%, bezogen auf das Gesamtgewicht der Pulver-Zusammensetzung, enthalten ist.

7. Verfahren zur Herstellung der in Wasser redispergierbaren Polymerpulver-Zusammensetzungen nach Anspruch 1 bis 6, **dadurch gekennzeichnet, dass** die Puzzolan-Komponente vor der Trocknung zur entsprechenden Polymerdispersion zugegeben wird, oder während der Trocknung mit der Polymerdispersion zerstäubt wird, oder nach der Trocknung dem Polymerpulver zugegeben wird.

8. Verfahren zur Herstellung der in Wasser redispergierbaren Polymerpulver-Zusammensetzungen nach Anspruch 7, **dadurch gekennzeichnet, dass** der in Wasser redispergierbaren Polymerpulver-Zusammensetzung kein weiteres Antiblockmittel zugegeben wird.

9. Verwendung der in Wasser redispergierbaren Polymerpulver-Zusammensetzungen nach Anspruch 1 bis 6 in bauchemischen Produkten, in Verbindung mit hydraulisch abbindenden Bindemitteln wie Zementen, Gips und Wasserglas.

10. Verwendung der in Wasser redispergierbaren Polymerpulver-Zusammensetzungen nach Anspruch 1 bis 6 für die Herstellung von Baukleber, Fliesenkleber und Vollwärmeschutzkleber, Putzen, Spachtelmassen, Fußbodenspachtelmassen, Verlaufsmassen, Dichtschlämmen, Fugenmörtel und Farben.

## Claims

1. Water-redispersible polymer powder compositions based on homopolymers or copolymers of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides, one or more protective colloids, if desired antiblocking agents, **characterized in that** one or more compounds from the group of pozzolanas are present.

2. Water-redispersible polymer powder compositions according to Claim 1, **characterized in that** one or more pozzolanas from the group consisting of pumice, trass, Santorin earth, kieselguhr, hornstones, chert, moler earth, ground brick, fly ash, silica dust, oil shale ash and calcined kaolin are present.

3. Water-redispersible polymer powder compositions according to Claim 1, **characterized in that** metakaolin is present as pozzolana.

4. Water-redispersible polymer powder compositions according to any of Claims 1 to 3, **characterized in that** homopolymers or copolymers used are vinyl acetate homopolymers, copolymers of vinyl acetate with ethylene, copolymers of vinyl acetate with ethylene and one or more further vinyl esters, copolymers of vinyl acetate with ethylene and acrylic esters, copolymers of vinyl acetate with ethylene and vinyl chloride, styrene-acrylic ester copolymers, styrene-1,3-butadiene copolymers.

5. Water-redispersible polymer powder compositions according to any of Claims 1 to 4, **characterized in that** protective colloids used are partially hydrolyzed or fully hydrolyzed, if desired hydrophobically modified, polyvinyl alcohols having a degree of hydrolysis of from 80 to 100 mol% and a Höppler viscosity in 4% strength aqueous solution of from 1 to 30 mPas (Höppler method at 20°C, DIN 53015) .

6. Water-redispersible polymer powder compositions according to any of Claims 1 to 5, **characterized in that** the pozzolana component is present in an amount of from 5 to 50% by weight, based on the total weight of the powder composition.

7. Process for producing the water-redispersible polymer powder compositions according to any of Claims 1 to 6, **characterized in that** the pozzolana component is added to the appropriate polymer dispersion before drying or is atomized together with the polymer dispersion during drying or is added to the polymer powder after drying.

8. Process for producing the water-redispersible polymer powder compositions according to Claim 7, **characterized in that** no further antiblocking agent is added to the water-redispersible polymer powder composition.

9. Use of the water-redispersible polymer powder compositions according to any of Claims 1 to 6 in building chemical products, in combination with hydraulically setting binders such as cements, plaster of Paris and water glass.

10. Use of the water-redispersible polymer powder compositions according to any of Claims 1 to 6 for the production of building adhesives, tile adhesives and full thermal insulation adhesives, plasters and renders, knifing fillers, flooring screeds, self-levelling compositions, sealing slurries, jointing mortars and paints.

## Revendications

1. Compositions de poudres de polymères redispersibles dans l'eau à base d'homo- ou de copolymères d'un ou plusieurs monomères du groupe comprenant des esters vinyliques d'acides alkylcarboxyliques non ramifiés ou ramifiés comportant de 1 à 15 atomes de C, des esters d'acide méthacrylique et des esters d'acide acrylique d'alcools comportant de 1 à 15 atomes de C, des vinylaromatiques, des oléfines, des diènes et des halogénures de vinyle, d'un ou plusieurs colloïdes protecteurs, le cas échéant d'agents antiblocage, **caractérisées en ce** q'elles contiennent un ou plusieurs composés du groupe des pouzzolanes.

2. Compositions de poudres de polymères redispersibles dans l'eau suivant la revendication 1, **caractérisées en ce qu'**elles contiennent une ou plusieurs pouzzolanes du groupe comprenant la pierre ponce, le trass, la terre de Santorin, la terre de diatomées, le hornstein, le schiste siliceux, la terre de Moler, la poussière de briques, les cendres volantes, la poussière de silice, les cendres de schiste bitumineux, le kaolin calciné.

3. Compositions de poudres de polymères redispersibles dans l'eau suivant la revendication 1, **caractérisées en ce qu'**elles contiennent en tant que pouzzolane du métakaolin.

4. Compositions de poudres de polymères redispersibles dans l'eau suivant les revendications 1 à 3, **caractérisées en ce que** l'on met en oeuvre en tant qu'homo- ou copolymères des homopolymères d'acétate de vinyle, des copolymères d'acétate de vinyle avec de l'éthylène, des copolymères d'acétate de vinyle avec de l'éthylène et un ou plusieurs autres esters vinyliques, des copolymères d'acétate de vinyle avec de l'éthylène et des esters d'acide acrylique, des copolymères d'acétate de vinyle avec de l'éthylène et du chlorure de vinyle, des copolymères de styrène - esters d'acide acrylique, des copolymères de styrène - 1,3-butadiène.

5. Compositions de poudres de polymères redispersibles dans l'eau suivant les revendications 1 à 4, **caractérisées en ce que** l'on met en oeuvre en tant que colloïdes protecteurs des poly(alcools vinyliques) partiellement saponifiés ou totalement saponifiés, éventuellement à hydrophobie modifiée, d'un degré d'hydrolyse de 80 à 100% molaires et d'une viscosité Höppler, en solution aqueuse à 4%, de 1 à 30 mPa.s (méthode selon Höppler à 20°C, DIN 53015).

6. Compositions de poudres de polymères redispersibles dans l'eau suivant les revendications 1 à 5, **caractérisées en ce que** le composant de pouzzolane est présent en une quantité de 5 à 50% en poids, par rapport au poids total de la composition de poudre.

7. Procédé de préparation des compositions de poudres de polymères redispersibles dans l'eau suivant les revendications 1 à 6, **caractérisé en ce que** le composant de pouzzolane est ajouté avant le séchage à la composition de polymère correspondante, ou est pulvérisé pendant le séchage avec la dispersion de polymère, ou est ajouté après le séchage de la poudre de polymère.

8. Procédé de préparation des compositions de poudres de polymères redispersibles dans l'eau suivant la revendication 7, **caractérisé en ce que** l'on n'ajoute aucun autre agent antiblocage à la composition de poudre de polymère redispersible dans l'eau.

9. Utilisation des compositions de poudres de polymères redispersibles dans l'eau suivant les revendications 1 à 6 dans des produits chimiques pour matériaux de construction, conjointement avec des liants à prise hydraulique tels que des ciments, du gypse et du verre soluble.

10. Utilisation des compositions de poudres de polymères redispersibles dans l'eau suivant les revendications 1 à 6 pour la préparation d'adhésifs pour matériaux de construction, de colles pour carrelages et d'adhésifs pour isolation thermique totale, d'enduits, de mastics, de bouche-pores pour sols, de masses de nivellement, de badigeons d'étanchéité, de mortiers de jointoiement et de colorants.
